Europäisches Patentamt

European Patent Office

Office européen des brevets

(19)

(11) **EP 1 497 787 B1**

(12) **EUROPEAN PATENT SPECIFICATION**

(45) Date of publication and mention
of the grant of the patent:
**11.01.2006 Bulletin 2006/02**

(51) Int Cl.:
*G06K 9/20* (2006.01)     *G06K 9/36* (2006.01)

(21) Application number: **03718458.7**

(22) Date of filing: **17.04.2003**

(86) International application number:
**PCT/US2003/012131**

(87) International publication number:
**WO 2003/090155 (30.10.2003 Gazette 2003/44)**

(54) **SYSTEM AND METHOD FOR IDENTIFYING AND EXTRACTING CHARACTER STRINGS FROM CAPTURED IMAGE DATA**

SYSTEM UND VERFAHREN ZUM IDENTIFIZIEREN UND EXTRAHIEREN VON ZEICHENKETTEN AUS ERFASSTEN BILDDATEN

SYSTEME ET PROCEDE D'IDENTIFICATION ET D'EXTRACTION DE CHAINES DE CARACTERES DANS DES DONNEES D'IMAGES SAISIES

(84) Designated Contracting States:
**DE FR GB NL**

(30) Priority: **19.04.2002 US 126151**

(43) Date of publication of application:
**19.01.2005 Bulletin 2005/03**

(73) Proprietor: **Hewlett-Packard Development Company, L.P.**
**Houston, TX 77070 (US)**

(72) Inventor: **LUO, Huitao**
**Fremont, CA 94539 (US)**

(74) Representative: **Jehan, Robert et al**
**Williams Powell**
**Morley House**
**26-30 Holborn Viaduct**
**London EC1A 2BP (GB)**

(56) References cited:
**EP-A- 0 854 433          WO-A-01/37212**
**US-B1- 6 249 604**

**Description**

## FIELD OF THE INVENTION

The present invention relates to a system and method of identifying and extracting character strings from image data, and in particular this disclosure provides a system and method for identifying and extracting character strings found in captured image data of a complex natural scene.

## BACKGROUND OF THE INVENTION

Due to the prevalence of digital images and the ease of digital image capture it has become desirable and sometimes necessary to be able to analyze and identify the image content of captured image data. As an example, when scanning a document, the scanned-in document data is often separated and extracted so as to process each type of image data in the document in a different manner. Different types of image data often included within a scanned document include alpha numeric text, natural images, and graphical images. Image data corresponding to text within scanned document image data is often processed and enhanced differently than natural or graphical image data. Often, extracted text is subsequently processed through optical character recognition software to allow the text to be converted from a digital bitmap format to an encoded format to allow electronic editing.

In the case of scanned documents, text image data is easy to identify and extract from a digital bitmap format of the document image because it is easy to control the quality of the scanning process so as to make the yielded text bitmap obviously different from the background. For instance, in the case of dark text on a light background, a large gradient occurs when passing from the light background to the dark text and a second gradient occurs when passing from the dark text to the light background. Filters designed to extract text data from image data are well known in the field and are generally based on detecting these large gradients to identify and extract the text data. Another known technique for identifying text in a scanned document is referred to as thresholding. The thresholding technique assumes that text in an image has a specific intensity whereas other image data types do not. The document image data is analyzed to identify all pixel values having a predetermined intensity within the digital bitmap of the document image. These pixels are then assumed to be text. In a variation of this embodiment, the thresholding technique is made adaptive such that it takes into account background intensity in the proximity of the pixel of interest.

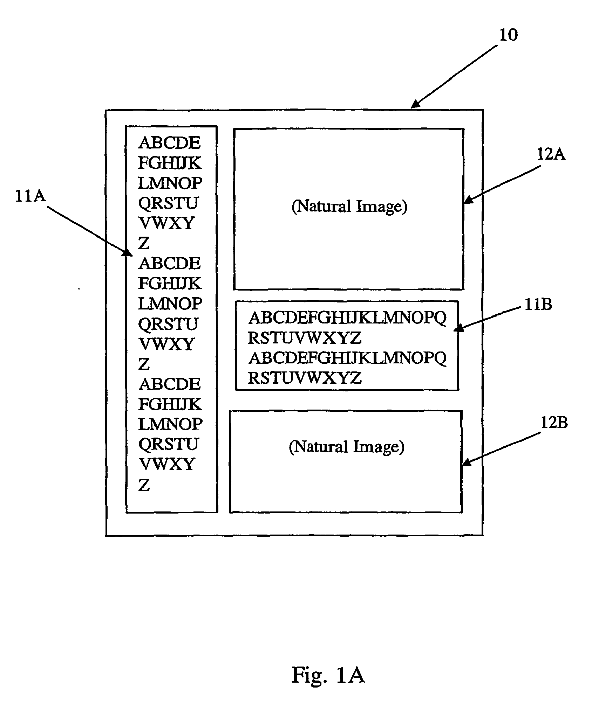

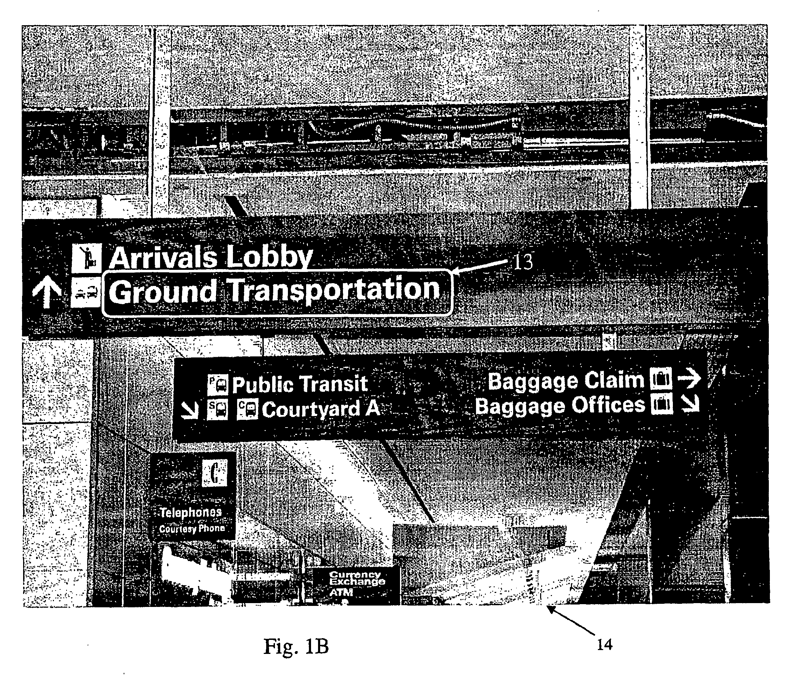

Although these text extraction techniques are reliable for printed text within a scanned document, they are not reliable in identifying character strings occurring within the natural environment. Specifically, a captured digital image of a posted sign including a character string occurring in the natural environment does not have the same differentiating characteristics as typed text within a scanned document. Fig. 1A shows an example of character strings, 11A and 11B, occurring in a scanned document 10. As can be seen, the text (11A and 11B) is generally separated from the natural images (12A and 12B) so as to make edge detection a relatively straight forward process. In addition, the text character strings have distinctive edges having associated large gradients facilitating text detection. Fig. 1B shows an example of a character string 13 occurring in a captured image 14 of a natural environment. In contrast to the character string shown in Fig. 1A, edges of character string 13 only provide partial information regarding the character. For instance, detected edges may or may not correspond to character edges. In addition, the spacing, illumination, background and foreground intensity, and image distortion all exhibit non-uniform, less predictable character string characteristics such that simple edge detection or thresholding can not be used to identify and extract these types of character strings occurring in the natural environment.

Unfortunately, known techniques for extracting a character string from captured image data are relatively unreliable. For instance, one known technique is based on assumptions relating to particular characteristics of the character string occurring in the natural environment. This technique is implemented with two main algorithms to find text from color images; one based on segmenting the image into connected components with uniform color, and the other based on computation of local spatial variation in the grayscale image of the color image. The basic assumption of this technique is that the character string text is a uniform color and text regions should have high grayscale variation. The problem is that often text does not behave according to these assumptions and as a result, may not be detected by this technique. Consequently, this technique is not reliable in detecting character strings in captured image data of a natural environment.

A second technique performs text detection according to a hierarchical algorithm. Initially, edge pixel information is obtained from the captured image dependent on image gradient information. The edge pixels are grouped to define character lines and curves of a character which, in turn, are merged into text strings. The problem with this technique is that it lacks robustness and as a result provides unreliable extraction results. In particular, this technique bases edge detection simply on image gradient information. However, in a captured image having non-uniform illumination, noise, or distortion the reliability of this type of edge pixel detection is significantly reduced or impossible. As a result, character lines and curves may not be identified due to erroneous edge pixel information. In addition, this technique associates particular curves and lines within the image to a given character simply based on the connectivity of associated edge pixels, ignoring all other aspects of the image. However, in the case in which character edges take sharp turns and or are not connected as expected a determination based solely on connectivity may "split" characters into two segments. Finally, this technique does not identify small (and often crucial) character string dots, accent marks, and punctuation.

In the European Patent EP 1147485 text detection is based on edge pixels extraction and connected component analysis. In particular the connected component analysis groups all edge pixels that are contiguous within a specific tolerance, then the connected components are filtered based on threshold criteria such as area, height, width and aspect ratio. Finally the filtered connected components are sorted according with their location and the sorted list is traversed to group them in block and/or lines.

## SUMMARY OF THE INVENTION

A system and method of detecting a character string within captured image data is described. Character edges are detected within the image data to generate an edge representation of the image data. The edge representation includes a plurality of single width edge pixels each having an associated magnitude and direction. Edge pixel labels are assigned dependent on the labeling of adjacent edge pixels. In one embodiment, edge pixel labeling is based on edge pixel connectedness. In another embodiment, edge pixel labeling is based further on edge pixel direction. Character bounding area definitions are created using the edge representation information and dependent on similar edge pixel labels. In one embodiment, character definitions are created by identifying and linking end point edge pixels at high character curvature areas. The character boundary definitions are filtered using direction information to identify character foreground and background information. In one embodiment, definitions are further filtered by analyzing one or both of character bounding area definition geometry and/or grayscale uniformity. Filtered definitions are combined with adjacent boundary definitions to form a line definition dependent on the adjacent bounding area definitions relative location to each other.

## BRIEF DESCRIPTION OF THE DRAWINGS

**Fig. 1A** shows an example of typical character strings and natural images occurring within a scanned document;

**Fig. 1B** shows an example of a captured digital image of character strings occurring in a natural environment;

**Fig. 2** illustrates a first embodiment of a method of extracting character strings from captured image data of a natural environment;

**Fig. 3A** illustrates a method of edge detection according to one embodiment of the present invention;

**Fig. 3B** illustrates edge direction definitions according to one embodiment of the present invention;

**Fig. 4A** illustrates edge pixel labeling according to one embodiment of the present invention;

**Fig. 4B** illustrates the concept of N-connected pixels, where N=8;

**Fig. 5** shows an example of a character edge and its corresponding character box in accordance with the present invention; and

**Fig. 6A** shows a raster scanned projection line intersecting edge pixels of a character box;

**Fig. 6B** shows projected gradient vectors for an edge pixel pair shown in Fig. 6A;

**Fig. 7A** illustrates a method of filtering candidate character boxes according to one embodiment of the present invention;

**Fig. 7B** illustrates a method of grayscale analysis according to one embodiment of the present invention;

**Fig. 8A** shows an example of a data structure defining a line of bounding area boxes and the corresponding relationship to the bounding area boxes;

**Fig. 8B** shows a predefined searching area about candidate boxes within the same line containing box;

**Fig. 9A** illustrates a method of binarization of bounding area boxes according to one embodiment of the present invention;

**Fig. 9B** shows intersection points obtained from raster scanning a neighbor box and a character box used for performing edge modulated binarization; and

**Fig. 10** illustrates a system for extracting text from a captured digital image according to one embodiment of the present invention.

## DETAILED DESCRIPTION OF THE INVENTION

In general, the present invention is a system for and method of extracting a character string from a captured digital image of a natural environment. It should be noted that captured image data as described in this disclosure includes at least a portion of image data corresponding to a graphical representation of at least one character string. The captured image data can further include image data corresponding to other objects naturally occurring in the environment about the graphical representation of the character string (e.g., inanimate and animate objects). Image data corresponding to posted signs in the natural environment often include a graphical representation of a single word, phrase, sentence or string of characters in a line that are bounded by the outside perimeter of the sign. Fig. 1B shows an example of a character string 13 occurring within a captured image 14 of a natural environment.

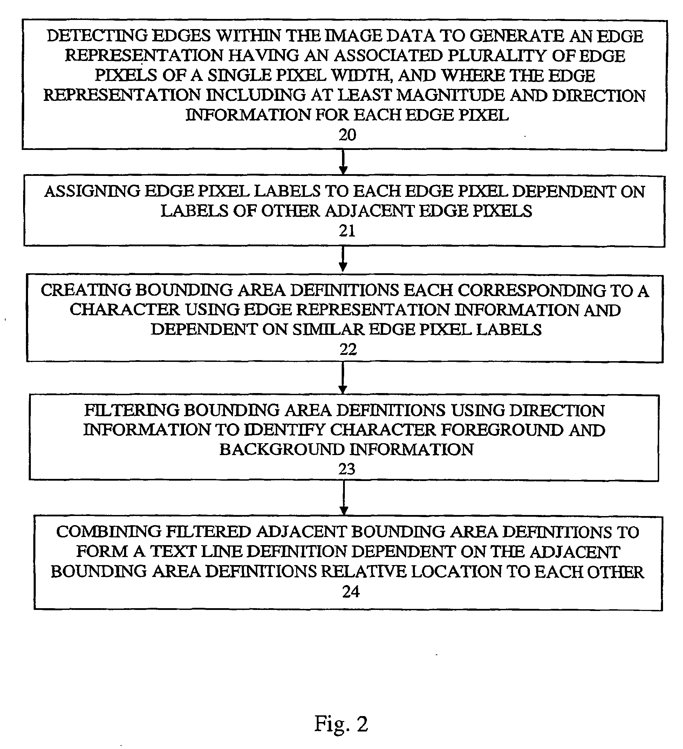

Fig. 2 shows a first embodiment of the method of the present invention for extracting character strings from captured digital image data of a natural environment. According to the illustrated method, edges are first detected (20) to determine an edge representation of the digital image. It should be noted that the digital image can be a color digital image or a grayscale digital image. In one embodiment, the color image can be converted into a grayscale image and the grayscale image can be used to obtain the edge representation of the image. In the case of a color image including a plurality of pixels each pixel having one or more associated digital component values (e.g., RGB values, CMYK values, etc.), edge detection can be performed on each component of the color image. For instance, if the image is represented in an RGB color space, only the red color component of all pixels in the image may be analyzed to obtain an edge representation of the digital image. Alternatively, each of the components or combinations of the components can be used to generate an edge representation of the digital image.

In one embodiment, the edge representation is obtained by processing the digital image using an algorithm that generates a single width edge pixel map for detected edges in the captured image data where each edge pixel in the map has an associated magnitude component and direction component. It should be noted that the algorithm generates a single width edge pixel even though detected edges have multipixel width. This algorithm can be implemented using a modified Canny algorithm as described in "A Computational Approach to Edge Detection" (J. Canny, IEEE Tran. PAMI, vol. 8, no.6, 1986). In general, the Canny algorithm assumes that characters have distinctive enough contrast with image background such that character boundaries are detectable by this algorithm. It should be noted that other algorithms providing similar results can also be used.

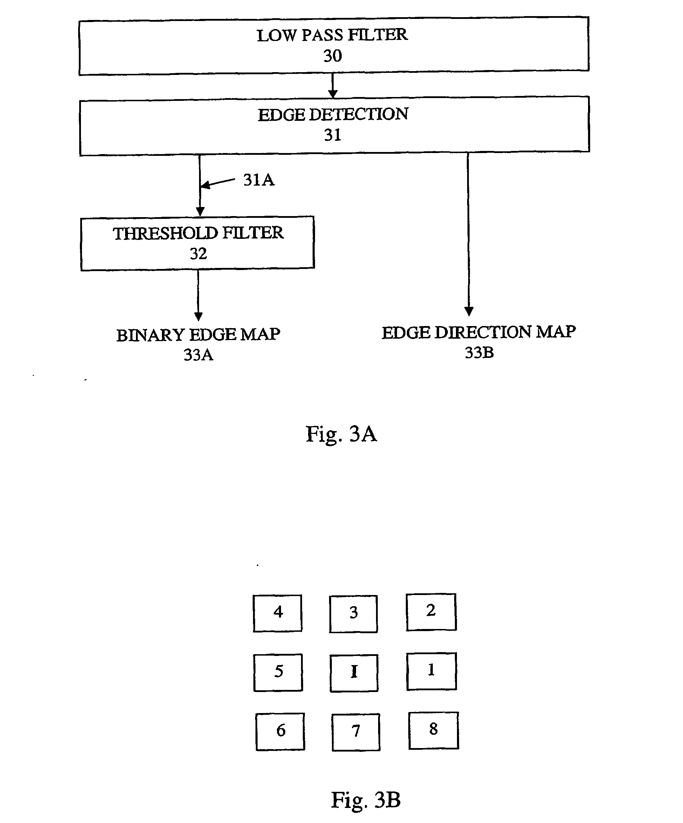

Fig. 3A shows one embodiment of edge detection according to the present invention. Initially, the digital image is filtered (30) using a Gaussian or similar diffusion type filter to remove any noise that may interfere in the detection of edges within the image. Next, the image data is processed by an edge detection algorithm (31) which generates a single pixel width edge representation of the digital image including 1) an intermediate edge map (31A) representing the magnitude of each edge pixel in the representation and 2) an edge direction map which provides a direction to each edge pixel dependent on its relation to an previous adjacent edge pixel. Fig. 3B illustrates one embodiment of edge direction definitions. As shown the edge pixel can be assigned a value 1-8 indicating its relative direction to a pixel of interest I where the pixel of interest is the previous adjacent edge pixel. The intermediate edge map is filtered (32) by a thresholding filter to remove edge pixels having weak magnitudes to generate binary edge map 33A.

Referring back to Fig. 2, once edge detection (20) is performed and an edge representation is generated, edge pixel labels are assigned (21) dependent on labels of other adjacent edge pixels.

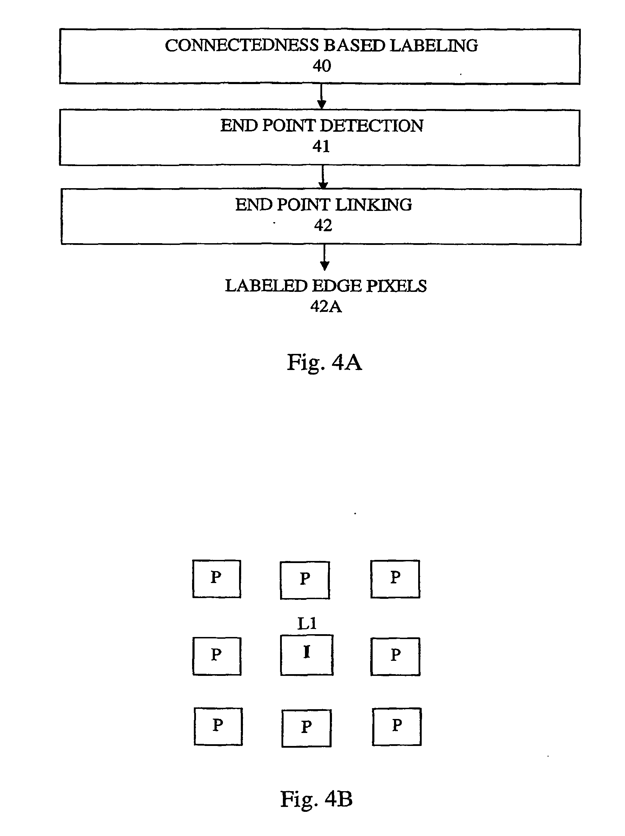

In one embodiment, labeling is performed as shown in Fig. 4A. Initially, labeling is performed according to pixel connectedness (40). In particular, each pixel is given a label value such that all N-connected pixels have the same value. Fig. 4B shows the concept of N-connected pixels where N=8. As shown, if an edge pixel resides in any of the pixel locations P about edge pixel of interest, I, having a label value L1, then that edge pixel value will also have a label value of L1. Next, edge pixels are evaluated to determine end point edge pixels (41) and then to link (42) end point edge pixels with other edge pixels so as to assign proper labels. The purpose of finding end point edge pixels is to identify breaks in character edges within the edge representation that were erroneously generated during edge detection (i.e., block 20, Fig. 2). Specifically, dependent on the algorithm used to detect edges, breaks may occur in the resulting edge representation at high curvature corners. In one embodiment, end points are detected according to the following algorithm:

For each edge pixel *p* in the edge representation, evaluate its *8* neighbors (as shown in Fig. 3B), set an 8-element integer array *neighbor* such that if the k-th neighboring pixel is an edge pixel, "*neighbor*[k-1]=1", otherwise "*neighbor*[k-1]=0". In addition, an integer variable *ncount* is set to the number of edge pixels *k* in the neighborhood:

    (1) If (*ncount*>=3), *p* is not end point, go to (6);
    (2) If (*ncount*<=1), *p* is end point, go to (6);
    (3) If ( (*neighbor*[2]==1 and *neighbor*[0]==1) or
       (*neighbor*[4]==1 and *neighbor*[0]==1) ), *p* is not end point, go to (6);
    (4) For (*k*=0; *k*<8; *k*++) {
        If (( *neighbor*[*k*]==1) and (*neighbor*[(k+1) mod 8]==1)),
          *p* is end point, go to (6);
       }
    (5) *p* is not end point;
    (6) Exit.

End point linking (42) is performed such that for every end point, its *k* by *k* neighborhood is checked to find any other detected end points. If another end point is detected in the neighborhood then an evaluation process is carried out to check if these two end points can be linked. If the two end points are linked, the edge pixels associated with the two end points are all assigned the same label. In one embodiment, this evaluation process is designed by searching for an optimal, minimal distance path that links the two end points. To qualify for linking, every pixel on this optimal path has a gradient above a predetermined threshold, (one option of this threshold selection is to use the same threshold used in 32 of Fig. 3A)

One algorithm that can be employed for searching for optimal paths is described as follows: assume two end points **e1** and **e2** are located at (*r1, c1*) and (*r2, c2*) respectively, where *r* and *c* are the row and column coordinates of the points with respect to the entire image coordinate system. A *k* by *k* rectangle search neighborhood (*SNE*) is defined for the end point pair such that it is centered at ((*r1+r2*)/2, (*c1+c2*)/2). For each 8-connected point pair **p** and **q** located within *SNE,* the distance from **p** to **q** is defined such that dist(**p**, **q**)=1 if the grayscale gradient at point **q** is above a predetermined threshold, otherwise, dist(**p**, **q**)=+ ∞. Note, the grayscale gradient of the image can be computed with Sobel Operator as described in "Digital Image Processing" (R. Gonzalez and R. Woods, Addison Wesley, 1992) or obtained as a byproduct of a Canny algorithm as described above in connection with Fig. 3A. The shortest distance from each point within *SNE* to end point **e1** can be computed using this distance definition and dynamic programming. More specifically, if we denote the shortest distance from a point **p** in *SNE* as *SD*(**p**), then *SD*(**p**) can be obtained as:

$$\text{Eq. 1} \quad SD(p) = \min_{q \in NE(p)} \{SD(q) + dist(q, p)\}$$

where *NE*(**p**) represents the set of points that are 8-connected with point **p.** Accordingly, we define *SD*(**e1**)=0 as a start point, and the shortest distance function is computed for each point within *SNE* using dynamic programming. For end point linking evaluation purposes, we use *SD*(**e2**). That is, the two end points **e1** and **e2** are only linked when *SD*(**e2**) is less than infinity.

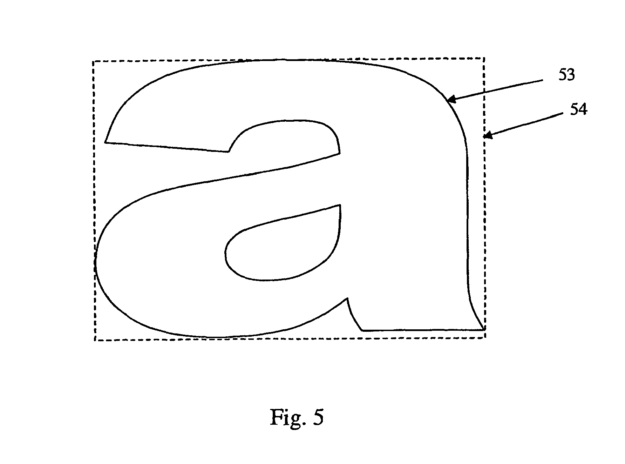

Referring to Fig. 2, once labels are assigned to pixel edges, bounding area definitions are created (22). Fig. 5 illustrates an example of a character edge 53 and its corresponding bounding area (also referred to as a character box). The character box definition provides information relating to both the character within the box and the box itself. It should be noted that in one embodiment, at the same time that edge pixels are labeled, definitions of bounding areas are also being created. In one embodiment, character boxes are defined according to a data structure including the information relating to the character and the box. An example of a character box data structure (BoxComp) is shown below:

```
structure BoxComp
{
        RECT rect;
        Int col0;
        Int row0;
        Int h0;
        Int textColor;
        Int edgeIndex;
        Int threshold;
}
```

The BoxComp structure contains the necessary feature fields to represent a character box. In the example shown above, rect corresponds to the box (or bounding area) identifier; row0 and col0 is the coordinate of the center of the box (assuming a coordinate system with respect to the entire image); h0 is the height of the box in number of pixels; textColor indicates whether the character is a dark character with respect to the background (textColor=0) or a light character with respect to the background (textColor=1); edgeIndex represents the label value used for the edge pixels of the character; and threshold is the suggested value used to convert the character box into a binary bitmap. It should be noted that not all fields shown in the example above are required and instead may be included for ease of use of the data structure in future processing steps. For instance, the height h0 is easily determined from the character box coordinates. Therefore, actual implementation should be determined based on the tradeoff between speed and memory requirements.

Hence, once all edges are labeled, a single character box is created for each different label assigned to the edge pixels such that for each different edge label (i.e., edgeIndex) there is a corresponding character box definition. In one embodiment, the created character box also includes geometric coordination information of the box (rect, col0, row0, h0) obtained from edge pixel coordinate information. During endpoint linking, sets of linked edge pixels are merged and re-labeled with a common character box label.

Referring to Fig. 2, once all character boxes are defined, the boxes are filtered (23) using direction information obtained from the edge pixel representation to identify character foreground and background information. The purpose of filtering character boxes is that some of the boxes (herein referred to as negative character candidates) may correspond to image data other than character strings mistakenly identified as character boxes. Filtering the boxes detects these erroneous boxes from the true character boxes (herein referred to as positive character candidates). In addition, direction information can be used to identify the background and the foreground of a character and hence can be used to analyze the identified background and foreground to determine if the character box is a positive character candidate or a negative character candidate.

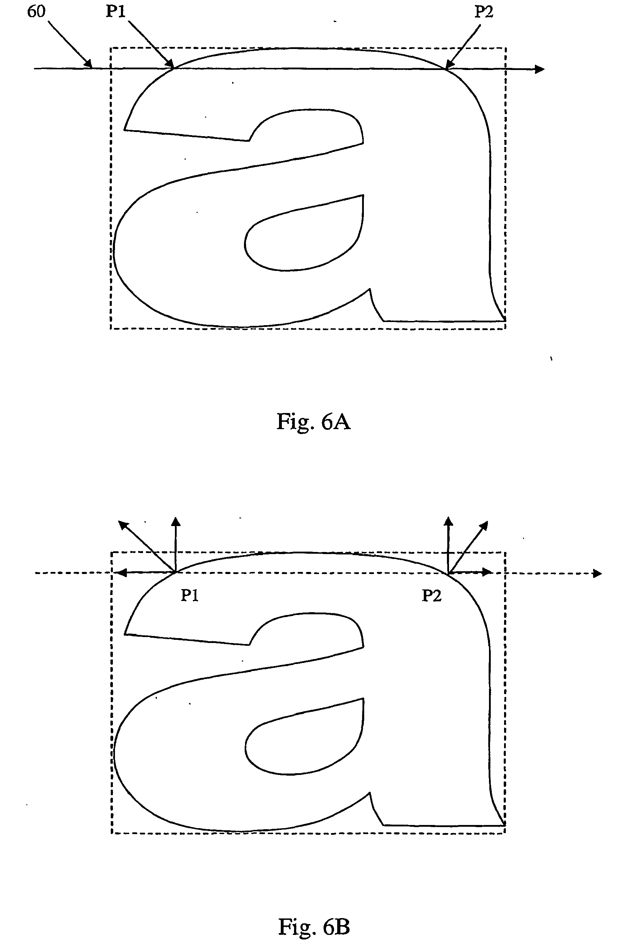

In one embodiment, character boxes are filtered using direction information by performing a topological analysis of the edges corresponding to each character box. The topological analysis includes two filtering processes. In the first process, a raster scanned projection line is used to intersect all edge pixels within a character box candidate on a pixel line-by-pixel line basis (Fig. 6A). The first and the last intersection points along the project line are denoted as P1 and P2 (note, it is not assumed that there are only two intersection points along the line). The direction information of the each edge pixel in the pair is obtained from the previously determined edge representation information, and in particular, from the direction information. For each edge pixel in the pair, the grayscale gradient vector is projected to the projection direction.

Fig. 6B illustrates a gradient vector for each of P1 and P2 shown in Fig. 6A. A projected gradient vector characterizes the change in intensity at each intersected point, and thus indicates whether the foreground is darker or lighter than the background. For example, in Fig. 6B, at intersection point P1, the direction of the projected gradient vector indicates a darker foreground and lighter background (the gradient points from lower grayscale to higher grayscale). The same principle applies to P2 (note, at P2 the relationship between foreground color and gradient projection direction is opposite to the one used at P1). It should be noted that in the case when the grayscale gradient vector at the intersection point is perpendicular to the raster scan projection line, the projected gradient vector is zero, and no indication about foreground color is available.

Based on the gradient projection information, each intersection point can be denoted by "+" (indicating dark foreground), "-" (indicating light foreground), or "0"(no indication). Note in one implementation, the aforementioned gradient projection information (including the magnitude and direction information) is not required because the direction of the final projected gradient vector, not the magnitude, is used for the foreground/background analysis. In one embodiment, the direction of the gradient can be quantized into 8 discrete values as indicated in Fig. 4B, which is represented in the form of an edge direction map (component 33B in Fig. 3A), and directional analysis can be performed based on the edge direction map.

Once direction information is obtained for first and last intersection points on the scan line an intersection point pair P1 and P2 is defined as a "matched" pair if their denotations are both "+" or both "-". The projection line process is carried out in a raster scan manner over the whole candidate box in each of the vertical and horizontal directions. The percentage of projection lines that yield matched pairs are used as a projection measure. In one embodiment, a candidate box having a projection measure of over 70% of the projection lines is considered a positive candidate.

The second topological process is an edge direction coherence measure and is also based on the edge gradient vector directions obtained from the edge pixel representation and the results from the previous topological analysis. As indicated above, the foreground/background color (light or dark) for a candidate box can be inferred from its edge pixel's edge direction map. However, the foreground color inferred from different edge pixels pairs may not be the same for one candidate box. For positive candidate boxes that correspond to text regions, the foreground/background color denotations (based on edge direction map) should be highly consistent, while for negative candidate boxes that represent non-text noises, the foreground/background color denotations will resemble the random feature of noise signals. Therefore, a coherency measure on the foreground/background color denotation statistics of the edge pixels serves as a good filtering measure to separate negative candidate boxes from positive ones. Only boxes with the majority of their edge pixels having the same foreground color denotations ("+" or "-") survive this filtering process. In addition, the filtering step yields the textColor field of the character box data structure, which will be later used when binarizing character boxes.

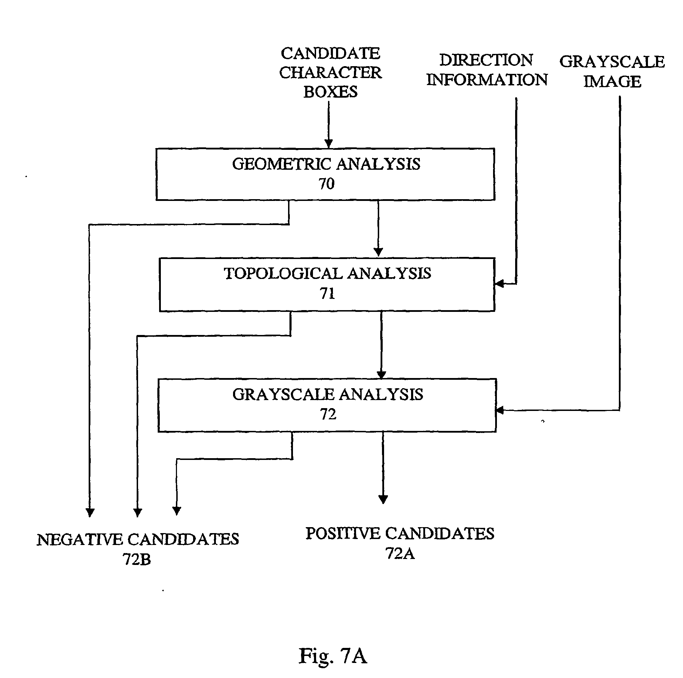

In accordance with another embodiment of the present invention candidate boxes are filtered as shown in Fig. 7A. In particular, initially a geometrical analysis 70 is performed on each box. The geometric analysis essentially measures the size (in number of pixels) and the aspect ratio of each candidate box. Only those boxes having the appropriate size and aspect ratio are then considered during further filtering analysis. The remainder of the candidates that do not pass the geometric analysis are stored as negative candidates 72B. In one embodiment, the geometrical analysis is performed prior to the topological analysis 71. Topological analysis 71 is performed on the candidates filtered from geometric analysis 70 as described above. Topological analysis uses direction information obtained during edge detection to identify possible foreground and background of character boxes. Character boxes that do not pass the topological analysis criteria are considered negative candidates and are stored with the negative candidates determined during geometric analysis. The candidates passing the topological criteria are then considered during grayscale analysis 72.

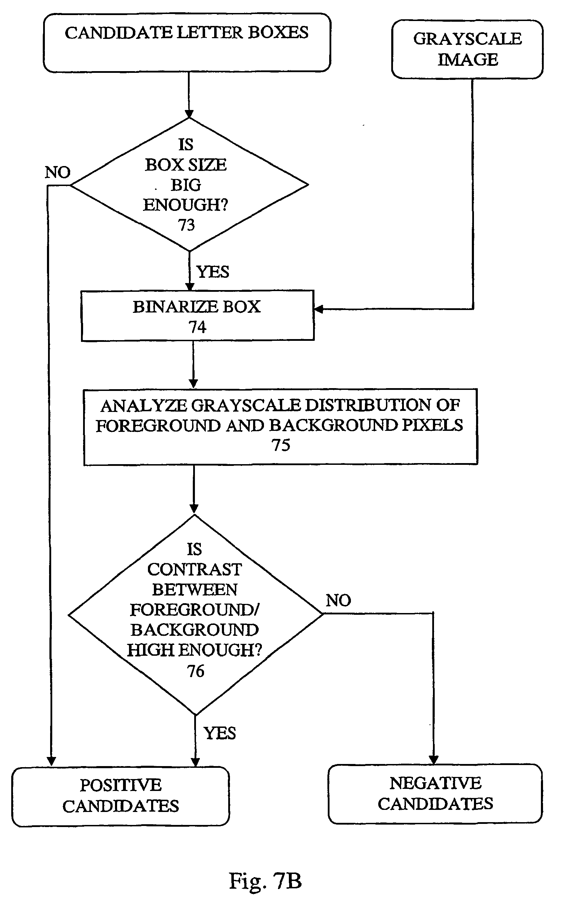

In general, grayscale analysis of candidate boxes is performed using the grayscale version of the original digital image to measure the grayscale distribution of the foreground and background pixels of each box. The distribution can then be used to show contrast between the foreground and background. If enough contrast exists then the box is considered a positive candidate. Fig. 7B shows one embodiment of grayscale analysis in accordance with the present invention. Initially, the size of the box is evaluated 73 to determine if it is big enough to perform the grayscale analysis (In one embodiment, the height of the box is compared with a threshold). If the box is too small, (e.g., the height is less than the threshold) it is bypassed since a statistical analysis cannot be reliably performed on small populations of pixel values. Bypassed boxes are assumed to be positive candidates. If the box provides a large enough population of values for a distribution analysis, then it is binarized 74 using the grayscale image of the original captured image. Binarization of the box is performed by mapping the candidate box pixels back to the corresponding pixels in the grayscale version of the original image and then using a binarization function to convert the grayscale image of the candidate box to a binary bitmap of the candidate box. Once the box is binarized, a distribution analysis is performed on the binary bitmap of the box. The grayscale mean and standard deviation of the foreground and background pixels of a given binarized box are defined as $g_f$, $g_b$, $\sigma_f$, and $\sigma_b$, respectively. The contrast, $c$, between the background and foreground pixels is defined according to Eq. 2 shown below:

$$\text{Eq. 2} \quad c = \exp\left(\frac{(g_f - g_b)^2}{\sigma_f^{\,2}}\right) + \exp\left(\frac{(g_f - g_b)^2}{\sigma_b^{\,2}}\right)$$

As shown in block 76 (Fig. 7B), if the contrast for the binarized box is above an acceptable value (i.e., high enough), then the box is considered a positive candidate. If not, it is considered a negative candidate and is saved with the remainder of the negative candidates 72B (Fig. 7A).

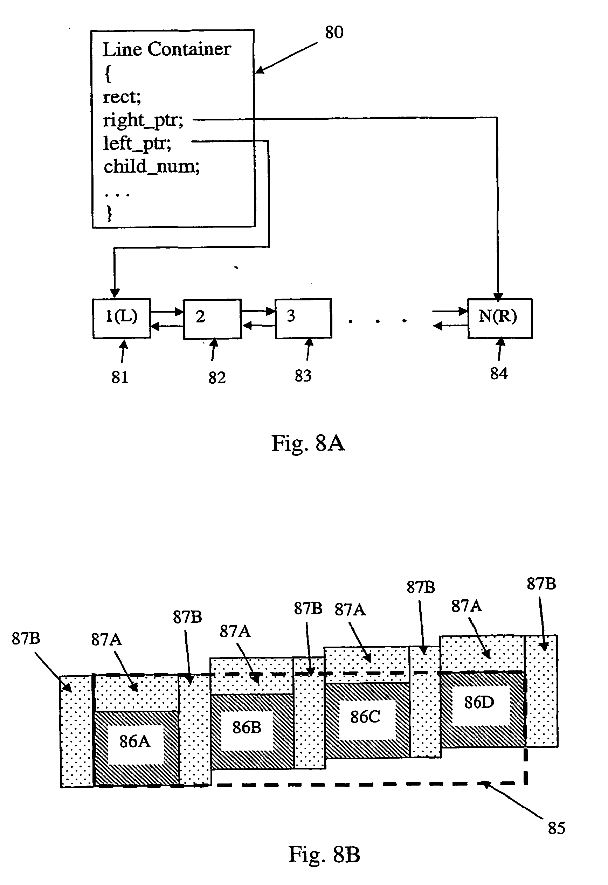

Referring back to Fig. 2, filtered bounding area definitions are combined/merged (24) with other adjacent bounding area definitions to form text line definitions dependent on their relative location to each other. In accordance with one embodiment, the lines are considered horizontal. In another embodiment of the present invention the line definition is implemented by a data structure that tracks the combined bounding area definitions for a given line. Fig. 8A shows an example of a data structure 80 and its relation to combined bounding area definitions 81-84. As shown, the data structure includes the following data fields: rect identifies the line definition of the combined or merged character boxes and child_num is the number of character boxes that have been merged to create this line definition (also referred to as child boxes). In one embodiment, the data structure 80 works as a container for all the child boxes, which are represented in the BoxComp data structure. In other words, the child boxes are linked using a two-way list data structure (which embeds the BoxComp) based on their spatial relation in the text line, i.e., if box A is spatially located on the left of box B, then box A is linked in front of the box B in the list. The spatial relation of the boxes can be determined using the center point of their containing rectangles. In accordance with this list design, two data fields: left_ptr and right_ptr are included as the two pointers leading to the BoxComp data structures of the character boxes on the left side and the right side of the line structure respectively. These two pointers can be used to quickly access the child boxes with respect to their spatial relations.

In one embodiment, bounding area definitions are merged by initially assigning a current positive candidate to a current line definition and consecutively searching for positive candidates within a pre-defined neighbor area about the current line definition. If another positive candidate is found to overlap the area, it is merged into the current line and then the neighbor area about the new line definition is searched. When no more positive candidates are found for a given line about any of the candidates associated with the line, then a new candidate is assigned a new line definition and the process is repeated. One embodiment of an algorithm for implementing merging positive candidates into lines is described as follows:

Input: Positive Candidates

Output: an array of line definitions

(1) When no more Positive Candidates then go to (6);
(2) Get current Positive Candidate, allocate a current line definition, and add current candidate to the line definition;
(3) Look in a predefined neighborhood of the bounding area of current line definition to see if any other positive candidates overlap in this neighborhood. If none, go to (1);
(4) If can merge with the current line definition, then add to the current line definition;
(5) Go to (3);
(6) Exit.

The merging criterion for (4) of the process shown above compares the overlapping candidate with three other associated character boxes of the line definition; a containing box associated with the current line of interest and both of the left and right child boxes of the line definition. In order to meet the merging criterion, the overlapping candidate box needs to have a similar height as either the left or right child boxes and/or a height that is between the height of the left and right child boxes. Candidate boxes are "added" by creating links between candidates of the same line definition as represented by the unidirectional arrows between boxes 81-84 in Fig. 8A.

In one embodiment of the present invention, after character boxes are merged to form line definitions, predefined areas about each character box associated with each line definition are searched to locate "other character" elements associated with the character string. For example, dots of lower case characters "i" and "j", various accent marks, and punctuation marks may have been eliminated during previous processing steps as being too small to be a character, or lacking horizontal alignment. These "other character" elements are located using the line definition information and the negative candidate character boxes previously filtered out and stored. In general, the negative candidate boxes are evaluated in view of their relation to the character boxes in each line given its size and proximity to the character boxes. Referring to Fig. 8B, and more specifically, for each line containing box 85, predefined areas 87A and 87B about each of the candidate boxes 86A-86D are searched for negative candidates having particular characteristics (e.g., size). In one embodiment, these "other character" elements are located and merged with a line definition according to the following process:

(1) For each L-container, define a dot searching area;
(2) Look in N-container, and see if any box overlaps substantially with the dot searching area;
(3) For each overlapped box, see if it is in appropriate size range to fit in as missing dots. If so, merge it to L-container.

Where L-container corresponds to a line definition and N-container corresponds to negative candidate boxes.

In another embodiment of the invention, the "other character" elements of text line definition are not searched from the negative candidate boxes. Instead, all the negative candidate boxes obtained from previous filtering procedures are discarded without storing them, so as to reduce memory consumption. In this case, the "other character" elements are located by repeating the character box generation method as described in Fig. 4A only in the pre-defined neighbor areas 87A and 87B. Once these character boxes are successfully generated and then evaluated to locate the "other characters", they can be further processed by merging them with the line definition as described above.

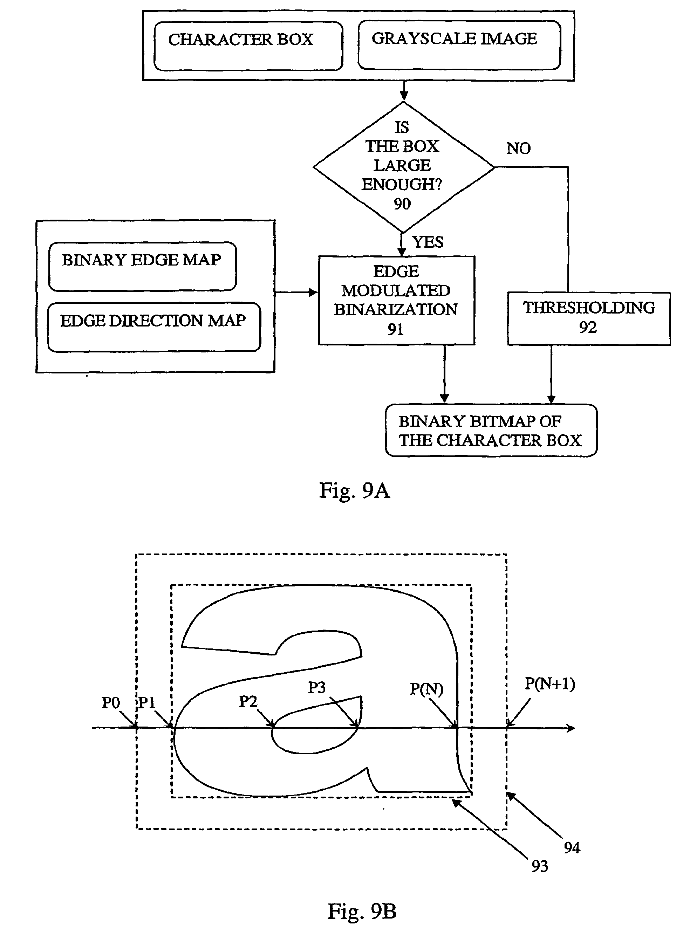

In accordance with one embodiment of the present invention, once all positive candidates and all associate 'other character" elements have been identified for each line definition, each associated defined character box for each line definition area is binarized. Fig. 9A shows one embodiment of binarization of the character boxes. Initially, the character box is evaluated to determine whether it is large enough (90). In particular, edge modulated binarization (91) is a statistical operation requiring a minimal population to obtain reliable results. If the size (i.e., number of pixels) of the box is not large enough, conventional thresholding is performed on the grayscale version of the character box to obtain a binarized character box. In one embodiment, the height of the box (obtained from the character box definition), is compared to a threshold value. If the height is less than the value then thresholding (92) is performed. If not, then edge modulated binarization (91) is performed to obtain the binarized character box.

Edge modulated binarization is performed using the character box definition, the original grayscale image, and the edge representation including the edge map (i.e., the magnitude information of edge representation) and edge direction map (i.e., direction information of edge representation). Referring to Fig. 9B, initially a neighbor box 94 is defined with respect to the character box 93. In one embodiment, the neighbor box 94 is obtained by expanding the character box 93 by 1.1-1.2 times. A raster scan procedure is employed to scan the character box line-by-line within the neighbor box. As the raster scan intersects the edges of the character in the character box, intersection points are labeled from left to right as $p_1, p_2, p_3, ..., p_N$. In addition, the points at which the raster scan intersects the neighbor box are labeled $p_0$ and $p_{(N+1)}$. Together these N+2 intersection points separate the line of pixels into N+2 segments $(p_0, p_1), (p_1, p_2),...,$ $(p_{(N)}, p_{(N+1)})$. A segment notation is defined as $(p_{(k)}, p_{(k+1)})$ to represent the pixels located in between points $p_{(k)}$ and $p_{(k+1)}$ on the raster scan line. In one embodiment, the binarization process assigns each segment of the pixels into two binary categories of foreground and background. The binarization process is referred to as "edge modulated binarization" because the elements that are being binarized by this process are segments of pixels. This is in contrast to typical prior art binary algorithms that binarize individual pixels, not segments of pixels. In other words, we assume the pixels in one segment should belong to the same binarization category: either foreground or the background.

In order to binarize the character box, the groups of segments are initially classified into foreground (F), background (B), and uncertain (U) segments based on the gradient vector directions. As described above in conjunction with Fig. 6, each intersection point pair $(p_{(k)}, p_{(k+1)})$ are either "matched" or "unmatched" depending on the projected gradient vector directions of the two points. Hence, if the pair of points $(p_{(k)}, p_{(k+1)})$ were previously "matched", then the segments identified by the "matched" pair of points can be classified as either a foreground (F) segment or background (B) segment based on the previously determined character box textcolor field (determined during topological analysis 71, Fig. 7A). In cases in which the pairs are "unmatched", these segments are classified as uncertain (U).

In another embodiment, the neighbor box intersection points are processed by determining the Laplacian at each of these points and based on the sign of the Laplacian, the neighbor intersection point pairs are classified into a "matched" or "unmatched" pairs. These pairs of intersection points can then be further classified into foreground (F), background (B), and uncertain (U) as described above.

Once all segments are classified as (F), (B), or (U), the segments are statistically evaluated so as to re-classify them as either (F) or (B) by determining a binary grouping for the three classifications (F), (B), and (U) of the segments according to the following algorithm:

(1) Two gaussian models are fit to the grayscale distribution of the pixels in (F) and (B) segments respectively, which we denote as $N(g_f, \sigma_f)$ and $N(g_b, \sigma_b)$, where $g_f (g_b)$ and $\sigma_f (g_b)$ represent the mean and standard variation of the gaussian distribution of the foreground (background) pixels.
(2) Measure the weighted distance between the two gaussian models:

$$\text{Eq. 3} \quad \text{Distance} = \exp\left(\frac{(g_f - g_b)^2}{\sigma_f{}^2}\right) + \exp\left(\frac{(g_f - g_b)^2}{\sigma_b{}^2}\right)$$

If the distance is below a threshold, the pixels from the (U) group is classified into either the (F) or (B) groups based on their distance to the (F) and (B) models, and go to (4);
(3) Using pixels in foreground segments (F) and background segments (B) as the initialization data, run an EM algorithm to group M line segments into two gaussian models;
(4) Exit.

In (3) EM algorithm is described in "Maximum likelihood from incomplete data via the EM algorithm" (A.P. Dempster, N.M. Laird, and D.B. Rubin, Journal of Royal Statistical Society, ser. B, vol. 39, pages 1-38, 1977).

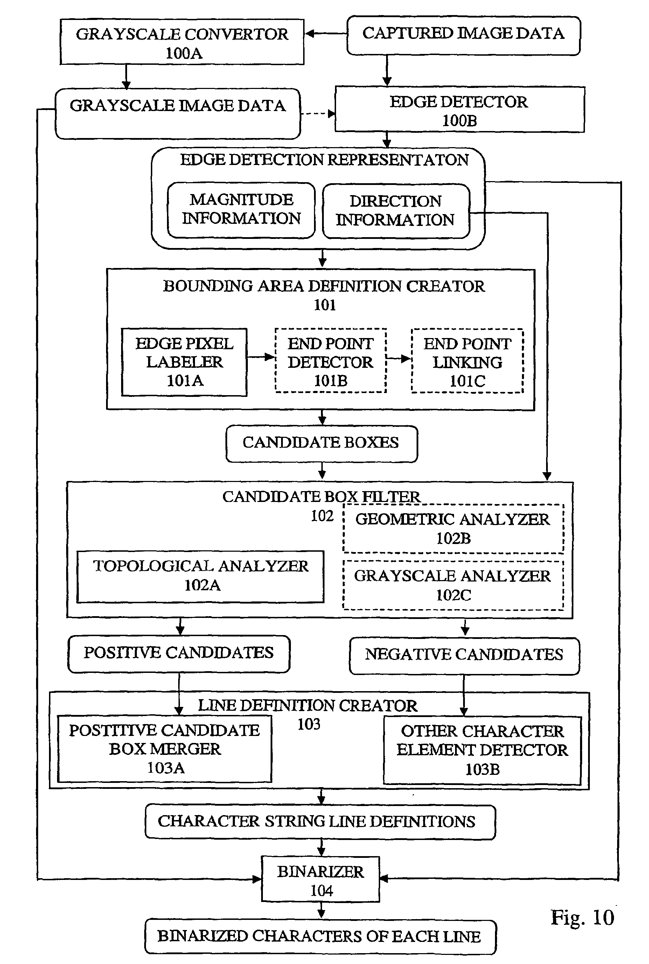

Fig. 10 shows one embodiment of a system for extracting character strings from captured image data in accordance with the present invention. As shown, captured image data is converted to grayscale image data by converter 100A. This data is provided to edge detector 100B. Alternatively, the captured image data is provided directly to edge detector 100B. Edge detector 100B generates an edge representation of the captured image data including magnitude information in the form of an edge map and direction information in the form of an edge direction map.

The edge representation is used by bounding area definition creator 101 to identify and generate definitions for each bounding area associated with each character (i.e., character box). The definition creator 101 includes at least edge pixel labeler 101A for labeling each edge pixel in the edge map dependent on proximity to adjacent pixels and dependent on direction information of the edge pixel. In addition, definition creator 101 optionally includes end point detector 101B and end point linker 101C for identifying unintentional break points in edges and merging (by re-labeling) edges associated with the identified break points into a single continuous edge. The labeled edges are used to create the bounding area definitions (also referred to as candidate boxes).

Candidate box filter 102 includes at least a topological analyzer 102A that uses direction information from the edge detection representation to match points along scan lines projected through each candidate box to identify character foreground and background: In addition, candidate box filter 102 optionally includes a geometric analyzer 102B and grayscale analyzer 102C. The geometric analyzer 102B filters out candidate boxes if its aspect ratio is not within an expected threshold value. In other words, if the aspect ratio is such that it is unlikely that the box represents a character in a character string, then it is filtered. The grayscale analyzer 102C performs a statistical analysis on the grayscale version of the original digital image to measure the grayscale distribution of the foreground and background of each box. The distribution is used to show contrast between the foreground and background. If enough contrast exists then the box is considered a positive candidate. The candidate box filter 102 generates both positive and negative candidate boxes.

Both of the positive and negative candidate boxes are merged into line definitions by the line definition creator 103 which includes a positive candidate merger 103A and the "other character" element detector 103B. The positive candidate merger 103A searches within a predetermined area about each positive candidate to locate other positive candidates. If a positive candidate is located within the area, they are merged into a line definition. The "other character" element detector 103B processes the negative candidates to identify character boxes located within a predefined area about positive candidates that correspond to character marks other than letters, such as punctuation marks. The identified "other character" candidates are then merged with its corresponding line definition.

Hence, a system and method of extracting character strings from capture image data is described.

In the preceding description, numerous specific details are set forth in order to provide a thorough understanding of the present invention. It will be apparent, however, to one skilled in the art that these specific details need not be employed to practice the present invention. In addition, it is to be understood that the particular embodiments shown and described by way of illustration is in no way intended to be considered limiting.

**Claims**

1. A method of processing captured image data including image data corresponding to at least one string of characters comprising:

   detecting (20) edges within the image data to generate an edge representation having an associated plurality of edge pixels of a single pixel width, the edge representation including at least magnitude and direction information for each edge pixel;
   assigning (21) edge pixel labels to each edge pixel dependent on pixel connectedness;
   creating (22) bounding area definitions each corresponding to a character using direction information and dependent on similar edge pixel labels;
   filtering (23) bounding area definitions using direction information to identify character foreground and background information; and
   merging (24) filtered adjacent bounding area definitions to form a line definition dependent on the adjacent bounding area definitions relative location to each other.

2. The method as described in Claim 1 wherein labeling edge pixels is dependent on identifying end point edge pixels.

3. The method as described in Claim 1 wherein filtering using direction information further comprises scanning bounding area definitions with a projection line to identify pairs of edge pixels and associated gradient vectors of each pair of edge pixels to evaluate associated foreground and background information of the pair.

4. The method as described in Claim 3 wherein filter using direction information further comprises statistically analyzing the gradient vector information for the pairs of edge pixels to identify a foreground shade associated with each bounding area definition.

5. The method as described in Claim 1 wherein filtering further comprises analyzing geometric characteristics of the bounding area definitions.

6. The method as described in Claim 1 wherein filtering further comprises identifying edge pixel pairs from direction information to identify the character background and foreground information.

7. The method as described in Claim 1 wherein filtering further comprises analyzing grayscale characteristics of the bounding area definitions to identify the character background and foreground information.

8. The method as described in Claim 1 wherein combining adjacent bounding area definitions to form a line definition comprises:

   a) assigning a current bounding area definition to a current line definition;
   b) searching a pre-defined area in the proximity of the current line;
   c) locating a new bounding area at least overlapping the pre-defined area;
   d) merging the definition of the new bounding area into the current line definition;
   e) repeating b) - d) until no more new bounding areas.

9. The method as described in Claim 1 further comprising binarizing each bounding area definition associated with each line definition by binarizing whole foreground and background segments of pixels for each bounding area definition.

10. A system of processing captured image data including image data corresponding to at least one string of characters comprising:

   edge detector (100B) for detecting edges within the image data to generate an edge representation having an associated plurality of edge pixels of a single pixel width, the edge representation including at least magnitude and direction information for each edge pixel;
   bounding area definition creator (101) including at least an edge pixel labeler for assigning edge pixel labels to each edge pixel dependent on pixel connectedness and direction information;
   bounding area definition filter (102) for filtering bounding area definitions using direction information to identify character foreground and background information; and
   line definition creator (103) for merging filtered adjacent bounding area definitions to form a line definition dependent on the adjacent bounding area definitions relative location to each other.

**Revendications**

1. Procédé de traitement de données d'images saisies comprenant des données d'images correspondant à au moins une chaîne de caractères comprenant les étapes consistant à :

   détecter (20) des bords dans les données d'images pour générer une représentation de bord ayant une pluralité associée de pixels de bord d'une largeur de pixel unique, la représentation de bord comprenant au moins des informations de grandeur et de direction pour chaque pixel de bord ;
   attribuer (21) des étiquettes de pixel de bord à chaque pixel de bord en fonction de la connexité des pixels ;
   créer (22) des définitions de zone limite correspondant chacune à un caractère au moyen des informations de direction et en fonction des étiquettes de pixel de bord similaires ;
   filtrer (23) les définitions de zone limite au moyen des informations de direction pour identifier des informations d'avant-plan et d'arrière-plan de caractère ; et
   fusionner (24) les définitions de zone limite adjacentes filtrées pour former une définition de ligne en fonction de la position relative des définitions de zone limite adjacentes les unes par rapport aux autres.

2. Procédé selon la revendication 1, dans lequel l'étiquetage des pixels de bord est fonction de l'identification des pixels de bord d'extrémité.

3. Procédé selon la revendication 1, dans lequel le filtrage au moyen des informations de direction comprend aussi le balayage des définitions de zone limite par un trait de projection pour identifier les paires de pixels de bord et les vecteurs gradients associés à chaque paire de pixels de bord pour évaluer les informations d'avant-plan et d'arrière-plan associées à la paire.

4. Procédé selon la revendication 3, dans lequel le filtrage au moyen des informations de direction comprend en outre l'analyse statistique des informations de vecteur gradient des paires de pixels de bord pour identifier un ton d'avant-plan associé à chaque définition de zone limite.

5. Procédé selon la revendication 1, dans lequel le filtrage consiste en outre à analyser les caractéristiques géométriques des définitions de zone limite.

6. Procédé selon la revendication 1, dans lequel le filtrage comprend en outre l'identification des paires de pixels de bord à partir d'informations de direction pour identifier des informations d'avant-plan et d'arrière plan de caractère.

7. Procédé selon la revendication 1, dans lequel le filtrage comprend en outre une analyse caractéristiques de niveaux de gris des définitions de zone limite pour identifier des informations d'avant-plan et d'arrière-plan de caractère.

8. Procédé selon la revendication 1, dans lequel l'association de définitions de zone limite adjacentes pour former une définition de ligne comprend les étapes suivantes :

   a) attribuer une définition de zone limite courante à une définition de ligne courante ;
   b) explorer une zone prédéfinie à proximité de la ligne courante ;
   c) localiser une nouvelle zone limite au moins en recouvrement avec la zone prédéfinie ;
   d) fusionner la définition de la nouvelle zone limite dans la définition de la ligne courante ;
   e) répéter les étapes b) à d) jusqu'à ce qu'il n'y ait plus de nouvelle zone limite.

9. Procédé selon la revendication 1, comprenant en outre la binarisation de chaque définition de zone limite associée à chaque définition de ligne par la binarisation de segments d'avant-plan et d'arrière-plan complets de pixels pour chaque définition de zone limite.

10. Système de traitement de données d'images saisies comprenant des données d'images correspondant à au moins une chaîne de caractères comprenant :

   un détecteur de bord (100B) pour détecter des bords dans les données d'images pour générer une représentation de bord ayant une pluralité associée de pixels de bord d'une largeur de pixel unique, la représentation de bord comprenant au moins des informations de grandeur et de direction pour chaque pixel de bord ;
   un créateur de définition de zone limite (101) comprenant au moins un étiqueteur de pixel de bord pour attribuer des étiquettes de pixel de bord à chaque pixel de bord en fonction de la connexité des pixels et des informations de direction ;
   un filtre de définition de zone limite (102) pour filtrer les définitions de zone limite au moyen des informations de direction pour identifier des informations d'avant-plan et d'arrière-plan de caractère ; et
   un créateur de définition de ligne (103) pour fusionner les définitions de zone limite adjacentes filtrées pour former une définition de ligne en fonction de la position relative des définitions de zone limite adjacentes les unes par rapport aux autres.

**Patentansprüche**

1. Ein Verfahren zum Verarbeiten von aufgenommenen Bilddaten, die Bilddaten umfassen, die zumindest einer Zeichenfolge von Schriftzeichen entsprechen, das folgende Schritte aufweist:

   Erfassen (20) von Kanten innerhalb der Bilddaten, um eine Kantendarstellung zu erzeugen, die eine zugeordnete Mehrzahl von Kantenpixeln einer einzigen Pixelbreite aufweist, wobei die Kantendarstellung zumindest Größen- und Richtungsinformationen für jedes Kantenpixel umfasst;
   Zuweisen (21) von Kantenpixeletiketten jedem Kantenpixel abhängig von einer Pixelverbundenheit;
   Erzeugen (22) von Begrenzungsbereichsdefinitionen, die jeweils einem Schriftzeichen entsprechen, unter Verwendung von Richtungsinformationen und abhängig von ähnlichen Kantenpixeletiketten;
   Filtern (23) von Begrenzungsbereichsdefinitionen unter Verwendung von Richtungsinformationen, um Schriftzeichenvordergrund- und -hintergrundinformationen zu identifizieren; und
   Vereinigen (24) von gefilterten benachbarten Begrenzungsbereichsdefinitionen, um eine Liniendefinition abhängig von der relativen Position von benachbarten Begrenzungsbereichsdefinitionen zueinander zu bilden.

2. Das Verfahren gemäß Anspruch 1, bei dem ein Etikettieren von Kantenpixeln von einem Identifizieren von Endpunktkantenpixeln abhängig ist.

3. Das Verfahren gemäß Anspruch 1, bei dem das Filtern unter Verwendung von Richtungsinformationen ferner ein Abtasten von Begrenzungsbereichsdefinitionen mit einer Projektionslinie aufweist, um Paare von Kantenpixeln und zugeordnete Gradientenvektoren jedes Paares von Kantenpixeln zu identifizieren, um zugeordnete Vordergrund- und Hintergrundinformationen des Paars auszuwerten.

4. Das Verfahren gemäß Anspruch 3, bei dem das Filtern unter Verwendung von Richtungsinformationen ferner ein statistisches Analysieren der Gradientenvektorinformationen für die Paare von Kantenpixeln aufweist, um eine Vordergrundschattierung zu identifizieren, die jeder Begrenzungsbereichsdefinition zugeordnet ist.

5. Das Verfahren gemäß Anspruch 1, bei dem das Filtern ferner ein Analysieren geometrischer Charakteristika der Begrenzungsbereichsdefinitionen aufweist.

6. Das Verfahren gemäß Anspruch 1, bei dem das Filtern ferner ein Identifizieren von Kantenpixelpaaren aus Richtungsinformationen aufweist, um die Schriftzeichenhintergrund- und Vordergrundinformationen zu identifizieren.

7. Das Verfahren gemäß Anspruch 1, bei dem das Filtern ferner ein Analysieren von Grauskalierungscharakteristika der Begrenzungsbereichsdefinitionen aufweist, um die Schriftzeichenhintergrund- und Vordergrundinformationen zu identifizieren.

8. Das Verfahren gemäß Anspruch 1, bei dem ein Kombinieren benachbarter Begrenzungsbereichsdefinitionen, um eine Liniendefinition zu bilden, folgende Schritte aufweist:

   a) Zuweisen einer aktuellen Begrenzungsbereichsdefinition zu einer aktuellen Liniendefinition;
   b) Durchsuchen eines vordefinierten Bereichs in der Nähe der aktuellen Linie;
   c) Lokalisieren eines neuen Begrenzungsbereichs, der den vordefinierten Bereich zumindest überlappt;
   d) Vereinigen der Definition des neuen Begrenzungsbereichs in die aktuelle Liniendefinition;
   e) Wiederholen von b) - d), bis es keine neuen Begrenzungsbereiche mehr gibt.

9. Das Verfahren gemäß Anspruch 1, das ferner ein Binarisieren jeder Begrenzungsbereichsdefinition, die jeder Liniendefinition zugeordnet ist, durch ein Binarisieren ganzer Vordergrund- und Hintergrundsegmente von Pixeln für jede Begrenzungsbereichsdefinition aufweist.

10. Ein System zum Verarbeiten aufgenommener Bilddaten, die Bilddaten umfassen, die zumindest einer Zeichenfolge von Schriftzeichen entsprechen, das folgende Merkmale aufweist:

   einen Kantendetektor (100B) zum Erfassen von Kanten innerhalb der Bilddaten, um eine Kantendarstellung zu erzeugen, die eine zugeordnete Mehrzahl von Kantenpixeln einer einzigen Pixelbreite aufweist, wobei die Kantendarstellung zumindest Größen- und Richtungsinformationen für jedes Kantenpixel umfasst;
   einen Begrenzungsbereichsdefinitionserzeuger (101), der zumindest einen Kantenpixeletikettierer zum Zuweisen von Kantenpixeletiketten zu jedem Kantenpixel abhängig von einer Pixelverbundenheit und von Richtungsinformationen umfasst;
   ein Begrenzungsbereichsdefinitionsfilter (102) zum Filtern von Begrenzungsbereichsdefinitionen unter Verwendung von Richtungsinformationen, um Schriftzeichenvordergrund- und -hintergrundinformationen zu identifizieren; und
   einen Liniendefinitionserzeuger (103) zum Vereinigen von gefilterten benachbarten Begrenzungsbereichsdefinitionen, um eine Liniendefinition abhängig von einer relativen Position benachbarter Begrenzungsbereichsdefinitionen zueinander zu bilden.

Fig. 1A

Fig. 1B

DETECTING EDGES WITHIN THE IMAGE DATA TO GENERATE AN EDGE
REPRESENTATION HAVING AN ASSOCIATED PLURALITY OF EDGE
PIXELS OF A SINGLE PIXEL WIDTH, AND WHERE THE EDGE
REPRESENTATION INCLUDING AT LEAST MAGNITUDE AND DIRECTION
INFORMATION FOR EACH EDGE PIXEL
20

ASSIGNING EDGE PIXEL LABELS TO EACH EDGE PIXEL DEPENDENT ON
LABELS OF OTHER ADJACENT EDGE PIXELS
21

CREATING BOUNDING AREA DEFINITIONS EACH CORRESPONDING TO A
CHARACTER USING EDGE REPRESENTATION INFORMATION AND
DEPENDENT ON SIMILAR EDGE PIXEL LABELS
22

FILTERING BOUNDING AREA DEFINITIONS USING DIRECTION
INFORMATION TO IDENTIFY CHARACTER FOREGROUND AND
BACKGROUND INFORMATION
23

COMBINING FILTERED ADJACENT BOUNDING AREA DEFINITIONS TO
FORM A TEXT LINE DEFINITION DEPENDENT ON THE ADJACENT
BOUNDING AREA DEFINITIONS RELATIVE LOCATION TO EACH OTHER
24

Fig. 2

```
┌─────────────────────────────────────────────┐
│              LOW PASS FILTER                  │
│                    30                         │
└─────────────────────────────────────────────┘
                      │
                      ▼
┌─────────────────────────────────────────────┐
│              EDGE DETECTION                   │
│                    31                         │
└─────────────────────────────────────────────┘
              │                      │
              │  ◄── 31A             │
              ▼                      │
┌─────────────────────────┐         │
│    THRESHOLD FILTER      │         │
│            32            │         │
└─────────────────────────┘         │
              │                      │
              ▼                      ▼
    BINARY EDGE MAP         EDGE DIRECTION MAP
         33A                      33B
```

Fig. 3A

| 4 | 3 | 2 |
|---|---|---|
| 5 | I | 1 |
| 6 | 7 | 8 |

Fig. 3B

CONNECTEDNESS BASED LABELING
40

END POINT DETECTION
41

END POINT LINKING
42

LABELED EDGE PIXELS
42A

Fig. 4A

| P | P | P |
|---|---|---|
| | L1 | |
| P | I | P |
| P | P | P |

Fig. 4B

Fig. 5

Fig. 6A

Fig. 6B

CANDIDATE
CHARACTER
BOXES

DIRECTION
INFORMATION

GRAYSCALE
IMAGE

GEOMETRIC ANALYSIS
70

TOPOLOGICAL ANALYSIS
71

GRAYSCALE ANALYSIS
72

NEGATIVE CANDIDATES
72B

POSITIVE CANDIDATES
72A

Fig. 7A

Fig. 7B

Line Container
{
rect;
right_ptr;
left_ptr;
child_num;
. . .
}

80

1(L) ↔ 2 ↔ 3 . . . N(R)

81          82          83          84

Fig. 8A

87B    87A    87B    87A    87B    87A    87B    87A    87B

86A    86B    86C    86D

85

Fig. 8B

Fig. 9A

Fig. 9B

GRAYSCALE CONVERTOR
100A

CAPTURED IMAGE DATA

GRAYSCALE IMAGE DATA

EDGE DETECTOR
100B

EDGE DETECTION REPRESENTATON

MAGNITUDE INFORMATION

DIRECTION INFORMATION

BOUNDING AREA DEFINITION CREATOR
101

EDGE PIXEL LABELER
101A

END POINT DETECTOR
101B

END POINT LINKING
101C

CANDIDATE BOXES

CANDIDATE BOX FILTER
102

GEOMETRIC ANALYZER
102B

TOPOLOGICAL ANALYZER
102A

GRAYSCALE ANALYZER
102C

POSITIVE CANDIDATES

NEGATIVE CANDIDATES

LINE DEFINITION CREATOR
103

POSTITIVE CANDIDATE BOX MERGER
103A

OTHER CHARACTER ELEMENT DETECTOR
103B

CHARACTER STRING LINE DEFINITIONS

BINARIZER
104

Fig. 10

BINARIZED CHARACTERS OF EACH LINE